# EUROPÄISCHE PATENTSCHRIFT

(11) **EP 2 731 850 B1**
(45) Veröffentlichungstag und Bekanntmachung des Hinweises auf die Patenterteilung: **22.04.2020**
(21) Anmeldenummer: 12737530.1
(22) Anmeldetag: 13.07.2012
(51) Int. Cl.: B62D 3/12, F16H 55/17

(54) **LENKRITZEL FÜR EIN LENKSYSTEM SOWIE VERFAHREN ZU DESSEN HERSTELLUNG**
STEERING PINION FOR A STEERING SYSTEM AND METHOD FOR THE PRODUCTION THEREOF
PIGNON DE DIRECTION POUR UN SYSTÈME DE DIRECTION ET PROCÉDÉ POUR SA FABRICATION

(30) Priorität: 15.07.2011 DE 102011079274
(43) Veröffentlichungstag der Anmeldung: 21.05.2014
(73) Patentinhaber: thyssenkrupp Presta AG, 9492 Eschen (LI)
(72) Erfinder: BIRKWALD, Frank, 73760 Ostfildern (DE); ZIEGLER, Christian, 73728 Esslingen (DE); HECK, Hubert, 40629 Düsseldorf (DE); SCHWARZHANS, Paul, A-6800 Feldkirch (AT); KOLLMEIER, Roger, 70329 Stuttgart (DE); MAIER, Aksel, 73547 Lorch (DE); VOHWINKEL, Kai, 45549 Sprockhövel (DE)
(74) Vertreter: Nordmeyer, Philipp Werner
(86) Internationale Anmeldenummer: PCT/EP2012/063841
(87) Internationale Veröffentlichungsnummer: WO 2013/010958

(56) Entgegenhaltungen:
- EP-A2- 1 065 131
- DE-A1- 10 305 074
- DE-B3- 10 260 426
- US-A1- 2007 068 726

## Beschreibung

### Technisches Gebiet

Die vorliegende Erfindung betrifft ein Lenkritzel für ein Lenksystem eines Kraftfahrzeugs sowie ein Verfahren zur Herstellung eines solchen Lenkritzels.

### Stand der Technik

Im Stand der Technik sind Lenkritzel als Kupplungsverbindung zwischen der Lenkwelle und der Zahnstange eines Kraftfahrzeugs bekannt. Diese Lenkritzel sind dazu vorgesehen, das von einem Fahrer über das jeweilige Lenkrad auf eine Lenkwelle aufgebrachte Drehmoment auf eine Zahnstange zu übertragen, welche dann ihrerseits über die Spurstangen die Verschwenkung der jeweiligen Räder des Fahrzeuges bewirkt. Ein solches Lenkritzel umfasst entsprechend einen Verzahnungsabschnitt, welcher zum kämmenden Eingriff in die Zahnstange vorgesehen ist, und einen Anbindungsabschnitt, welcher zur Anbindung des Lenkritzels an die Lenkwelle vorgesehen ist. Typischerweise weist der Verzahnungsabschnitt eine Schrägverzahnung auf, welche dann mit einer entsprechenden Gegenverzahnung der Zahnstange in Eingriff gebracht wird.

Lenkritzel sind im Stand der Technik einstückig ausgebildet und sind typischerweise aus einem Material gefertigt, welches eine hohe Festigkeit aufweist, um im Bereich der Verzahnung eine zuverlässige Funktion und eine hohe Lebensdauer zu erreichen.

In diesem Zusammenhang wird beispielsweise die GB 953,793 genannt, welche ein solches Lenkritzel zeigt. Das hier offenbarte Lenkritzel ist einteilig ausgebildet und ist entsprechend seiner Anwendung aus einem hochfesten Werkstoff ausgebildet.

Die DE 10 2009 029 407 A1 offenbart ein Verfahren zur Herstellung eines Lenkritzels, wobei gemäß diesem Verfahren das Lenkritzel zunächst aus einem Halbzeug mittels spanender Bearbeitung und dann mittels einer darauf folgenden Walzoperation hergestellt wird. Das Lenkritzel ist einteilig ausgebildet.

Aus der US 3,688,374 ist ein Verfahren zur Herstellung eines einstückigen Lenkritzels durch Kaltumformen bekannt.

Weiterhin ist aus der DE 102 60 426 B3 ein einstückiges Lenkritzel bekannt, welches durch Kalt- oder Warmumformen hergestellt ist.

Typischerweise ist der Durchmesser des Verzahnungsabschnitts größer als der Durchmesser des Schaftes und des Anbindungsabschnitts. Bei der Herstellung eines herkömmlichen Lenkritzels entstehen entsprechend hohe Bearbeitungskosten, da der Anbindungsabschnitt auf die geringeren Durchmesser abgedreht oder in aufwändiger Umformung geformt werden muss.

Aus der US 2007/0068726 A1 ist eine Lenkvorrichtung mit einer elektrischen Lenkunterstützung bekannt, wobei ein Lenkritzel mit einer ritzelseitigen Welle und einer antriebsseitigen Welle vorgesehen sind, welche über einen Verbindungsstift miteinander verbunden sind.

Die EP 1 065 131 A2 zeigt ein Verfahren zum Ausbilden eines schraubenförmigen Ritzels für eine Zahnstangenlenkvorrichtung und den Oberbegriff des Anspruchs 1.

### Darstellung der Erfindung

Entsprechend liegt der vorliegenden Erfindung die Aufgabe zugrunde, ein Lenkritzel anzugeben, welches mit reduziertem Materialeinsatz und reduziertem Herstellungsaufwand herstellbar ist, sowie ein Verfahren zur Herstellung eines solchen Lenkritzels anzugeben.

Die Aufgabe wird durch ein Lenkritzel mit den Merkmalen des Anspruchs 1 gelöst. Vorteilhafte Weiterbildungen dieses Lenkritzels sind in den Unteransprüchen angegeben.

Entsprechend weist das Lenkritzel, welches insbesondere als Kupplungsverbindung zwischen Lenkwelle und Zahnstange eines Kraftfahrzeugs vorgesehen ist, einen Verzahnungsabschnitt zum Eingriff in eine Zahnstange und einen Anbindungsabschnitt zur Anbindung an eine Lenkwelle auf. Erfindungsgemäß sind ein den Verzahnungsabschnitt aufweisendes Verzahnungsteil und ein den Anbindungsabschnitt aufweisendes Verbindungsteil vorgesehen, wobei das Verzahnungsteil und das Verbindungsteil drehfest miteinander verpresst sind.

Durch die Ausbildung des Lenkritzels durch zwei Bauteile, nämlich das den Verzahnungsabschnitt aufweisenden Verzahnungsteil und das den Anbindungsabschnitt aufweisenden Verbindungsteil, wird erreicht, dass das Verzahnungsteil sowie das Verbindungsteil jeweils gemäß den entsprechenden Anforderungen ausgebildet werden können. Auf diese Weise lässt sich ein Lenkritzel mit reduziertem Materialeinsatz herstellen.

Insbesondere lässt sich bei dem genannten Lenkritzel das Verzahnungsteil weiterhin aus einem hochwertigen Werkstoff und aus dem Vollen gefertigt herstellen, so dass das Verzahnungsteil und insbesondere die Verzahnung selbst den Belastungen im Betrieb Stand halten kann. Das Verbindungsteil hingegen kann aus einem weniger hochwertigen Material und hohl ausgebildet werden
Weiterhin ermöglicht die Aufteilung des Lenkritzels in Verzahnungsteil und Verbindungsteil, dass die Herstellung vereinfacht werden kann, da das Verbindungsteil gleich in der gewünschten Stärke bzw. mit dem gewünschten Durchmesser geliefert werden kann, so dass ein entsprechendes Abdrehen des Schaftes oder eine aufwändige Umformung und des Anbindungsabschnitts des Verbindungsteils nicht notwendig ist.

Durch die drehfeste Verpressung kann weiterhin auf separate Verfahrensschritte zur Herstellung der drehfesten Verbindung verzichtet werden. Beispielsweise kann auf das Einfügen eines Stiftes, einer Schraube oder eines anderen Verbindungsmittels verzichtet werden, wodurch die Herstellung vereinfacht werden kann. Weiterhin wird eine zumindest bezüglich der Rotation vollkommen spielfreie Verbindung durch das Verpressen geschaffen, durch welche eine präzise Funktion der Lenkung und eine hohe Lebensdauer erreicht werden kann. Entsprechend erfolgt die Verbindung vorzugsweise durch ein Verpressen ohne zusätzliche Verbindungsbauteile oder zusätzliche Sicherungsbauteile.

Um die Herstellung weiter zu vereinfachen, aber dennoch eine drehfeste Verbindung zu erreichen, welche den Anforderungen an ein Lenkritzel gerecht wird, überlappen das Verbindungsteil und das Verzahnungsteil vorteilhaft. Insbesondere überlappen ein Verbindungsabschnitt des Verzahnungsteils mit einem Verbindungsbereich des Verbindungsteils. Entsprechend kann das Lenkritzel durch Ineinanderschieben des Verzahnungsteils in das Verbindungsteil und anschließendes Verpressen hergestellt werden.

Bevorzugt ist die Verbindung zwischen dem Verzahnungsteil und dem Verbindungsteil dauerhaltbar und nicht demontierbar ausgebildet. Unter dem Begriff "nicht demontierbar" wird hier verstanden, dass die Konstruktion der Verbindung derart ist, dass keine Demontage von Verzahnungsteil und Verbindungsteil vorgesehen ist. Insbesondere ist ein Demontage und anschließender Montage nicht vorgesehen. Es kann daher sogar denkbar und möglich sein, dass das Verzahnungsteil und das Verbindungsteil nicht so demontiert werden können, dass sie nachfolgend wieder montiert werden könnten. Eine Demontage der Verbindung zwischen dem Verbindungsteil und dem Verzahnungsteil ist in diesem Fall entsprechend nicht zerstörungsfrei durchführbar.

Um die Verdrehfestigkeit zwischen dem Verzahnungsteil und dem Verbindungsteil weiter zu verbessern, kann der Verbindungsabschnitt mindestens eine Materialerhebung beispielsweise in Form einer Rändelung und/oder eines Noppen und/oder einer Rollierung, aufweisen.

Besonders bevorzugt sind in dem Verbindungsabschnitt und/oder dem Verbindungsbereich Materialerhebungen und/oder Materialabsenkungen vorgesehen, bevorzugt Noppen, Rändel, Rollierungen und/oder Rillen, um die mögliche Drehmomentübertragung zu erhöhen. Durch derartige Verbindungsmittel kann zusätzlich zum Kraftschluss auch ein Formschluss für die Verbindung bereitgestellt werden.

Ferner ist, erfindungsgemäß, zur Erhöhung einer möglichen Drehmomentübertragung der Verbindungsabschnitt und/oder der Verbindungsbereich konisch ausgebildet.

Um die Materialkosten und das Gewicht des Lenkritzels zu reduzieren, können das Verzahnungsteil und das Verbindungsteil bevorzugt unterschiedliche Materialien umfassen und auf diese Weise effizient den jeweiligen Aufgabenstellungen angepasst werden.

Eine besondere Gewichtsersparnis und gleichzeitig eine zuverlässige Funktion ergeben sich, wenn das Verzahnungsteil aus dem Vollen gefertigt ist und das Verbindungsteil aus einem Rohr geformt ist. Dabei kann das Verzahnungsteil in einem Kaltmassivumformprozess hergestellt werden. Eine kostengünstige Bereitstellung des Verbindungsteils wird auch dadurch erreicht, dass Rohre in verschiedenen Standardabmessungen leicht und preiswert verfügbar sind.

Eine einfache Herstellung bei gleichzeitig zuverlässiger Funktion ergibt sich, wenn das Verbindungsteil und das Verzahnungsteil kraftschlüssig oder kraft- und formschlüssig miteinander verbunden sind. Insbesondere durch das Verbinden des Verbindungsteils mit dem Verzahnungsteil ausschließlich über eine Pressoperation kann eine besonders einfache Herstellung erreicht werden. Eine zumindest teilweise konische Ausbildung des Verbindungsabschnitts kann vorgesehen sein, um die Montage zu erleichtern.

Bevorzugt weist das Verzahnungsteil eine Vertiefung, beispielsweise in Form einer ganz oder teilweise umlaufenden Nut und/oder einer Ausnehmung auf, in welche Material des Verbindungsteils, insbesondere durch Rändeln und/oder Rollieren und/oder Aufpressen und/oder Walzen eingebracht ist, um eine formschlüssige Verbindung als Auszugsicherung auszubilden.

Die Vertiefung kann dabei in einer bevorzugten Ausführungsform mindestens eine Zahnung und/oder Rändlung aufweisen, um eine möglichst drehfeste Verbindung zwischen dem Verbindungsteil und dem Verzahnungsteil herstellen zu können.

Das Verzahnungsteil weist bevorzugt einen Lagersitz zur Aufnahme eines Wälzlagers auf, welches als Radiallager und/oder als Axiallager für das Lenkritzel dienen kann.

Weiterhin bevorzugt ist das Wälzlager zwischen dem Verbindungsteil und dem Verzahnungsteil verpresst und wird auf diese Weise formschlüssig und unter Vorspannung zwischen dem Verbindungsteil und dem Verzahnungsteil gehalten. Dabei wird das Wälzlager besonders bevorzugt in Radialrichtung formschlüssig und in Axialrichtung unter Vorspannung gehalten.

Durch das drehfeste Verpressen des Verbindungsteils mit dem Verzahnungsteil wird gleichzeitig in einer besonders bevorzugten Variante das Wälzlager eingeklemmt bzw. mit einer Vorspannung so beaufschlagt, dass es mit seinem Innenring fest an dem Lenkritzel gehalten wird. Mit anderen Worten kann durch das drehfeste Verpressen des Verbindungsteils mit dem Verzahnungsteil gleichzeitig auch eine sichere Befestigung des Wälzlagers erreicht werden.

Unter dem Begriff "drehfest verpresst" wird hier verstanden, dass das Verbindungsteil mit dem Verzahnungsteil so durch das Verpressen und den entsprechend resultierenden Kraftschluss und bevorzugt den entstehenden Pressitz verbunden sind, dass die über das Verbindungsteil eingebrachten Drehmomente über diese durch Verpressen entstandene Verbindung an das Verzahnungsteil übertragen werden können. Ein gewisser Formschluss kann dabei zusätzlich vorgesehen sein, insbesondere durch ein Verpressen über einen gerändelten oder rollierten Abschnitt oder ein zusätzlich mögliches Einwalzen in einen verzahnten Abschnitt.

Die oben genannte Aufgabe wird weiterhin durch ein Verfahren zur Herstellung eines Lenkritzels mit den Merkmalen des Anspruchs 10 gelöst. Vorteilhafte Weiterbildungen des Verfahrens sind in den Unteransprüchen angegeben.

Entsprechend umfasst das Verfahren zur Herstellung eines Lenkritzels mit einem Verzahnungsabschnitt zum Eingriff in eine Zahnstange und einem Anbindungsabschnitt zur Anbindung an eine Lenkwelle die Schritte des Bereitstellens eines den Verzahnungsabschnitt aufweisenden Verzahnungsteils und des Bereitstellens eines den Anbindungsabschnitt aufweisenden Verbindungsteils. Danach wird das Verzahnungsteil mit dem Verbindungsteil drehfest verbunden und die Teile zur Herstellung der drehfesten Verbindung miteinander verpresst.

Auf diese Weise wird ein zuverlässiges Herstellungsverfahren angegeben, mittels welchem ein Lenkritzel bei effizientem Materialeinsatz hergestellt werden kann.

Ein Wälzlager kann vor der Verbindung des Verzahnungsteils mit dem Verbindungsteil auf einen Lagersitz des Verzahnungsteils aufgebracht werden. Es ist besonders bevorzugt, das Wälzlager zwischen dem Verzahnungsteil und dem Verbindungsteil zu verpressen, bevorzugt unter Aufbringung einer Vorspannung auf das Wälzlager.

Um eine Ausziehsicherung bereit zu stellen kann am Verzahnungsteil mindestens eine Vertiefung, bevorzugt in Form einer Nut und/oder einer Ausnehmung eingebracht werden und Material des Verbindungsteils kann in die Vertiefung hinein gebracht werden, insbesondere durch Rollieren oder durch Ausbilden einer Sicke. Die Vertiefung in Form einer umlaufenden Nut kann dabei mit Vorzug an ihren umlaufenden Rändern eine Verzahnung aufweisen, in die beim Rollieren oder Walzen das aufgepresste Verbindungsteil eingeformt wird, wodurch ein zusätzlicher Formschluss bereitgestellt wird.

In einer besonders bevorzugten Ausführungsform umfasst das Verfahren zur Herstellung eines Lenkritzels mit einem Verzahnungsabschnitt zum Eingriff in eine Zahnstange einer Kraftfahrzeuglenkung und mit einem Anbindungsabschnitt zur Anbindung des Lenkritzels an eine Lenkwelle mindestens folgende Schritte:
- Bereitstellen eines den Verzahnungsabschnitt und einen Verbindungsabschnitt aufweisenden Verzahnungsteils;
- Bereitstellen eines den Anbindungsabschnitt und einen Verbindungsbereich aufweisenden Verbindungsteils, wobei im Verbindungsbereich eine Aufnahme in Form einer Öffnung zur Aufnahme des Verbindungsabschnitts des Verzahnungsteils ausgebildet ist;
- Aufbringen einer Materialerhebung, bevorzugt in Form einer Rollierung und/oder Rändelung, auf dem Verbindungsabschnitt derart, dass die Materialerhebungen über den ursprünglichen Außendurchmesser des Verbindungsabschnitts hinausreichen und deren einbeschriebener Durchmesser größer ist als der Innendurchmesser der Öffnung des Verbindungsteils;
- Verpressen des Verbindungsbereichs mit dem Verbindungsabschnitt zur Bildung einer kraftschlüssigen Verbindung.

Mit Vorzug ist die Aufnahme in Form der Öffnung rein zylindrisch ausgebildet und beim Aufpressen wird der Durchmesser der Öffnung um weniger als 0,2mm aufgeweitet. Unter rein zylindrisch ist im Sinne der vorliegenden Erfindung eine nur durch übliche Herstelltoleranzen von der exakten zylindrischen Form abweichende Form zu verstehen.

Bevorzugt kann vor der Verbindung des Verzahnungsteils mit dem Verbindungsteil ein Wälzlager auf einen Lagersitz des Verzahnungsteils aufgebracht werden. Auf diese Weise kann eine besonders effiziente Herstellung des Lenkritzels erfolgen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigt:
- Figur 1: schematisch den Aufbau eines typischen Lenksystems;
- Figur 2: eine schematische perspektivische Darstellung eines Lenkritzels gemäß einer ersten Ausführungsform;
- Figur 3: eine schematische perspektivische Darstellung eines Lenkritzels gemäß einer zweiten Ausführungsform;
- Figur 4: eine schematische perspektivische Darstellung eines Verzahnungsteils in einer weiteren Ausführungsform;
- Figur 5: eine schematische Seitenansicht eines Lenkritzels gemäß einer weiteren Ausführungsform;
- Figur 6: einen schematischen Querschnitt durch das in Figur 5 gezeigte Lenkritzel;
- Figur 7: eine schematische Seitenansicht eines Detailausschnitts eines weiteren Lenkritzels;
- Figur 8: einen schematischen Querschnitt durch den in Figur 7 gezeigten Detailausschnitt des Lenkritzels; und
- Figur 9: einen schematischen Detailausschnitt einer Nut in einem Verzahnungsteil;
- Figur 10: eine schematische perspektivische Darstellung eines Verzahnungsteils in einer weiteren Ausführungsform;
- Figur 11: eine schematische perspektivische Darstellung eines Verzahnungsteils in einer weiteren Ausführungsform;
- Figur 12: eine schematische perspektivische Darstellung einer Ausführungsform eines Verbindungsteils.

### Detaillierte Beschreibung der bevorzugten Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet und eine wiederholte Beschreibung dieser Elemente wird teilweise fortgelassen, um Redundanzen in der Beschreibung zu vermeiden.

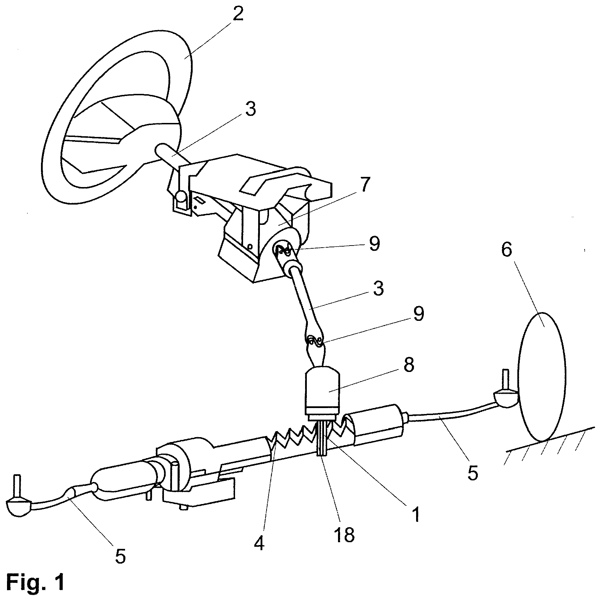

In Figur 1 ist schematisch der Aufbau eines typischen Lenksystems eines Kraftfahrzeugs gezeigt. Entsprechend ist ein Lenkrad 2 vorgesehen, über welches der Fahrer die Lenkbewegungen ausführt, die dann an die Räder 6 übertragen werden sollen, um eine Richtungsänderung des Kraftfahrzeuges zu bewirken.

Die Lenkbewegungen des Lenkrades 2 werden über eine Lenkwelle 3 auf ein Lenkritzel 1 übertragen, welches einen Verzahnungsbereich aufweist, der mit einer Zahnstange 4 kämmt. Durch Rotation des Lenkritzels 1 wird die Zahnstange 4 translatorisch entlang ihrer Achse bewegt. Die Zahnstange 4 ist mit Spurstangen 5 verbunden, welche ihrerseits die translatorische Bewegung der Zahnstange 4 in eine Lenkbewegung der schematisch angedeuteten Räder 6 übertragen.

Die Lenkkräfte können über eine Hilfskraftunterstützung 7 oder 8 verstärkt und/oder unterstützt werden. In dem gezeigten Ausführungsbeispiel des typischen Lenksystems sind die schematisch angedeuteten Lenkkraftunterstützungen 7, 8 zwischen dem Lenkrad 2 und dem Lenkritzel 1 vorgesehen. Eine Hilfskraftunterstützung 7, 8 kann dabei entweder eine reine Unterstützungskraft bereitstellen oder kann alternativ oder in Kombination mit dieser Funktion auch einen Zusatzlenkwinkel erzeugen, wenn dies über die entsprechenden Regelsysteme des Fahrzeuges angefordert wird.

Die Lenkwelle 3 ist üblicherweise mehrteilig ausgebildet und erstreckt sich vom Lenkrad 2 zum Lenkritzel 1 hin, wobei die Führung der Lenkwelle mittels Universalgelenken 9 an die Einbaubedingungen in dem jeweiligen Fahrzeug angepasst wird.

Das Lenkritzel 1 muss beispielsweise je nach Anordnung und Ausführung des jeweiligen Lenksystems erhebliche Drehmomente von bis zu 250 Nm übertragen. Im Stand der Technik sind die Lenkritzel daher einteilig ausgebildet und mittels spanenden Bearbeitungsverfahren aus dem Vollen gefertigt und meist zusätzlich gehärtet, um den Beanspruchungen durch die Übertragung der hohen Drehmomente, die geforderte Präzision beim Lenken des Kraftfahrzeugs sowie eine hohe Standfestigkeit und eine angemessene Lebensdauer zu gewährleisten.

Das Lenkritzel 1 ist entsprechend als Kupplungsverbindung zwischen der Lenkwelle 3 und der Zahnstange 4 vorgesehen. Um diese Funktion erfüllen zu können, weist es einen Verzahnungsabschnitt zum Eingriff in die Zahnstange 4 und einen Anbindungsabschnitt 10 zur Anbindung an die Lenkwelle 3 auf.

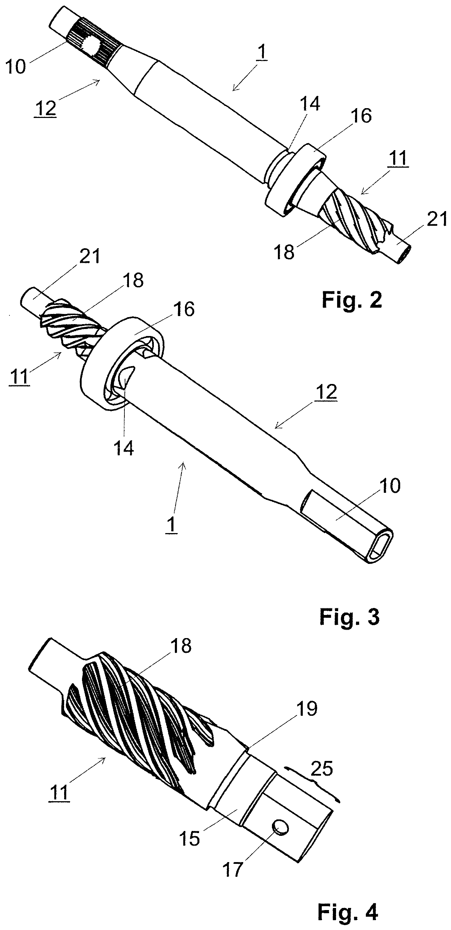

Figur 2 zeigt ein Lenkritzel 1 gemäß der vorliegenden Erfindung. Das Lenkritzel 1 weist ein Verbindungsteil 12 sowie ein Verzahnungsteil 11 auf, wobei das Verzahnungsteil 11 und das Verbindungsteil 12 als zwei separate Bauteile ausgebildet sind und zur Ausbildung des Lenkritzels 1 zumindest drehfest miteinander verbunden sind. Das Verzahnungsteil 11 weist dabei den Verzahnungsabschnitt 18 zum Eingriff mit der Zahnstange 4 auf und das Verbindungsteil 12 weist den Anbindungsabschnitt 10 zur Anbindung an die Lenkwelle 3 auf.

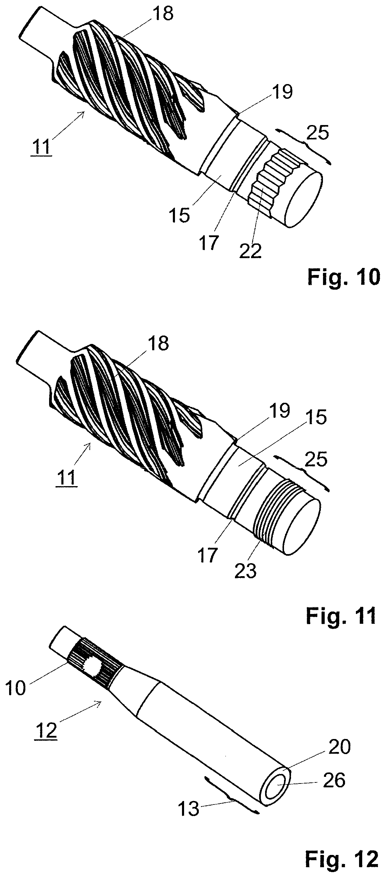

Der Anbindungsabschnitt 10 des Verbindungsteils 12 ist, wie in Figuren 2 und 12 gut zu sehen, gegenüber dem restlichen Schaft des Verbindungsteils 12 verjüngt ausgebildet und weist eine Riffelung auf, um entsprechend eine Drehfestigkeit der Anbindung an die Lenkwelle 3 zu bereitzustellen. Neben der gezeigten Riffelung können auch andere geometrische Maßnahmen getroffen werden, um eine entsprechend drehfeste - montierbare und wieder demontierbare - Anbindung des Verbindungsteils 12 an eine Lenkwelle 3 zu erreichen. In einer bevorzugten Ausführungsform ist die Riffelung als Kerbverzahnung oder als Mehrflach ausgebildet. Diese Kerbverzahnung oder diese in Form eines Polygons angeordneten, mehrfachen flachen und ebenen Abschnitte sind bevorzugt in einem Umformverfahren durch Pressen oder Hämmern hergestellt. Eine Herstellung durch ein Innenhochdruckverfahren sind denkbar und möglich. Zur Montage des Verbindungsteils 12 mit der Lenkwelle 3 ist in der Regel ein - in den vorliegenden Figuren nicht gezeigter - verschraubbarer Bolzen vorgesehen. Weiter weist das Verbindungsteil 12 einen Verbindungsbereich 13 auf, in dem eine Aufnahme in Form einer zylindrischen Öffnung 26 eingebracht ist. Am vom Anbindungsabschnitt 10 abgewandten Ende des Verbindungsteils 12 ist eine Stirnfläche ausgebildet, die die Öffnung 26 umschließt und die als Schulter 20 im Lenkritzel 1 dient.

Das Verzahnungsteil 11 weist im Bereich des Verzahnungsabschnitts 18 eine Schrägverzahnung auf, welche dazu gedacht ist, in die Zahnstange 4 des Lenksystems einzugreifen. Eine Rotation des Lenkritzels 1 und insbesondere des Verzahnungsteils 11 ruft entsprechend eine translatorische Bewegung der Zahnstange 4 hervor. Auch wenn in den gezeigten Ausführungsbeispielen eine Schrägverzahnung gezeigt ist, kann auch jegliche andere Verzahnung verwendet werden, die eine Kraftübertragung von dem Verzahnungsteil 11 zur Zahnstange 4 ermöglicht.

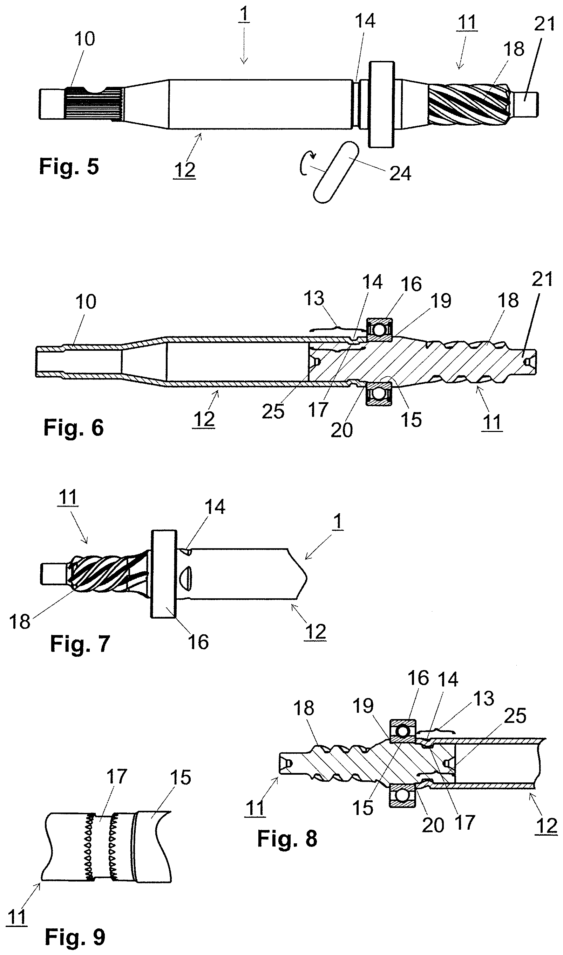

Das Verbindungsteil 12 und das Verzahnungsteil 11 sind dadurch drehfest miteinander verbunden, dass sie aufeinander aufgepresst sind und entsprechend ein Presssitz ausgebildet wird. Das Verbindungsteil 12 und das Verzahnungsteil 11 überlappen in einem Verbindungsbereich 13 des Verbindungsteils 12 und einem Verbindungsabschnitt 25 des Verzahnungsteils 11, wie sich insbesondere aus den Darstellungen zu den Ausführungsbeispielen der Figuren 5 und 6 bzw. 7 und 8 ergibt.

Diese Verbindung zwischen dem Verzahnungsteil 11 und dem Verbindungsteil 12 ist mit Vorzug dauerfest und nicht demontierbar ausgebildet. Unter "nicht demontierbar" wird in der vorliegenden Erfindung nicht die vollständige Unmöglichkeit der Demontage verstanden, sondern die Konstruktion in der Weise, dass eine Demontage und anschliessende erneute Montage der demontierten Teile nicht vorgesehen ist.

Die Ausbildung eines drehfesten Presssitzes wird durch das Bereitstellen von Materialerhebungen, insbesondere von Noppen, einer Rändelung oder einer Rollierung in dem Verbindungsabschnitt 25 des Verzahnungsteils 11 unterstützt. Der jeweilige Verbindungsbereich 13 und/oder Verbindungsabschnitt 25 ist auch zumindest über einen Teil seiner Länge hinweg leicht konisch ausgebildet, um die Ausbildung eines Presssitzes beim Verpressen der beiden Bauteile zu vereinfachen und die Montage zu erleichtern.

Um - neben der Ausbildung einer drehfesten Verbindung - auch eine Sicherung gegen eine axiale Verschiebung beziehungsweise gegen ein Auseinanderziehen des Verzahnungsteils 11 zum Verbindungsteil 12 bereit zu stellen ist eine Auszugssicherung 14, in Form einer umlaufenden Sicke, vorgesehen, mittels welcher das Verbindungsteil 12 mit dem Verzahnungsteil 11 in Auszugsrichtung bzw. in Richtung der Achse des Lenkritzels 1 verbunden ist. Auf die konkrete Ausbildung der Auszugssicherung 14 wird in den Darstellungen zu den Ausführungsbeispielen der Figuren 5 und 6 bzw. 7 und 8 noch eingegangen.

Eine Auszugssicherung des Verbindungsteils 12 bezüglich des Verzahnungsteils 11 wird darüber hinaus auch durch den Presssitz erreicht, derart, dass in einer besonders bevorzugten Variante bereits das Aufpressen des Verbindungsteils 12 auf das Verzahnungsteil 11 zur Ausbildung der Auszugsicherung ausreicht.

Zur Lagerung des Lenkritzels im Gehäuse des Lenkgetriebes ist ein Lager vorgesehen. Mit Vorzug wird dabei zumindest ein Wälzlager 16 eingesetzt. Dieses Wälzlager 16 kann in einfacher Weise integral mit dem Lenkritzel 1 der vorliegenden Erfindung ausgebildet werden. Hierzu ist das Wälzlager 16 bevorzugt zwischen dem Verbindungsteil 12 und dem Verzahnungsteil 11 angeordnet. Das Wälzlager 16 wird durch eine erste, am Verzahnungsteil 11 angeordnete Schulter 19 und durch eine zweite, durch das stirnseitige, dem Verzahnungsteil 11 zugewandte Ende des Verbindungsteils 12 gebildete Schulter 20 positioniert. Das Wälzlager 16 wird zwischen dem Verzahnungsteil 11 und dem Verbindungsteil 12 dadurch gehalten, dass das Verzahnungsteil 11 mit dem Verbindungsteil 12 verpresst werden. Besonders bevorzugt wird auf diese Weise eine Vorspannung der beiden genannten Teile auf das Walzlager 16 hin ausgebildet, so dass das Walzlager 16 zwischen dem Verbindungsteil 12 und der Verzahnungsteil 11 kraftschlüssig gehalten wird.

Zusätzlich kann neben dem Wälzlager 16, welches als Radiallager dient, noch ein weiteres Lager 21 vorgesehen sein, welches als Axiallager dient. Dieses Lager 21 kann als Gleitlager oder als Wälzlager ausgebildet sein.

Das Lager 21 kann zusätzlich zur axialen Lagerung auch eine radiale Lagerung bereitstellen. Es ist denkbar und möglich die axiale Lagerung im Wälzlager 16 darzustellen und auf das Lager 21 zu verzichten.

In dem in Figur 3 gezeigten Ausführungsbeispiel ist ein weiteres Beispiel eines Lenkritzels 1 mit einem Verzahnungsteil 11 und einem Verbindungsteil 12 gezeigt, wobei das Verbindungsteil 12 aus einem Rohr geformt ist. In diesem Fall wird der Anbindungsabschnitt 10 durch eine Abflachung und Verjüngung des Rohres hergestellt, so dass eine Anbindung der Lenkwelle 3 an den Anbindungsabschnitt 10 durch ein entsprechend mit dem Anbindungsabschnitt 10 kooperierende Aufnahme in der Lenkwelle 3 verbunden werden kann.

Um, neben der drehfesten Ausbildung, auch eine Befestigung und Sicherung in axialer Richtung zu erhalten, ist wiederum eine Auszugssicherung 14, hier als Beispiel in Form von nicht umlaufenden Vertiefungen, vorgesehen.

Figur 4 zeigt ein aus dem Vollen gefertigtes Verzahnungsteil 11, welches neben dem eigentlichen Verzahnungsabschnitt 18 auch einen Lagersitz 15 aufweist, der zur Aufnahme eines in den Figuren 2 und 3 gezeigten Wälzlagers 16 vorgesehen ist. Der Lagersitz 15 ist in einer besonders bevorzugten Variante in seiner axialen Erstreckung kleiner, als die axiale Erstreckung des Walzlagers 16. Mit anderen Worten ist das Wälzlager 16 breiter als der Lagersitz 15. Auf diese Weise wird erreicht, dass die Vorspannung, welche durch die Schulter 19 des Verzahnungsteils 11 und die Schulter 20 des Verbindungsteils 12 auf das Wälzlager 16 aufgebracht wird, auf einen vorgegebenen Wert eingestellt werden kann - unabhängig von den Toleranzen in den Breiten. Entsprechend liegen das Verbindungsteil 12 und das Verzahnungsteil 11 in Axialrichtung nicht derart aneinander an, dass das Aufbringen der Vorspannung auf das Wälzlager 16 hin nicht mehr möglich wäre.

Weiterhin ist der Verbindungsabschnitt 25 des Verzahnungsteiles 11 gezeigt, auf welchen der entsprechend komplementäre Verbindungsbereich 13 des Verbindungsteils 12 in einer nachfolgenden Operation aufgeschoben bzw. aufgepresst wird. Der Verbindungsabschnitt 25 zeigt hier eine Vertiefung 17, in welche Material des Verbindungsteils 12 fließen kann, um hier eine formschlüssige Verbindung in axialer Richtung des Lenkritzels 1 zwischen dem Verbindungsteil 12 und dem Verzahnungsteil 11 herzustellen. So kann auch eine weitere Vorspannung auf das Wälzlager 16 aufgebracht werden, um das Wälzlager 16 in der gewünschten Position zu halten.

Weiterhin zeigt der Verbindungsabschnitt 25 eine abgeflachte Querschnittsgeometrie, welche zur Ausbildung einer alternativen drehfesten Verbindung geeignet ist.

Um das Wälzlager 16 bei der Herstellung des Lenkritzels 1 genau und lebensdauerfest fixieren zu können, ist der innere Laufring des Wälzlagers 16 zwischen einer Schulter 19 am Verzahnungsteil 11 und der Schulter 20, die durch das dem Wälzlager 16 zugewandten Ende des Verbindungsteils 12 gebildet ist, unter Vorspannung auf dem Lagersitz 15 fixiert. Die Vorspannung wird dabei bevorzugt beim Verpressen des Verzahnungsteils 11 mit dem Verbindungsteil 12 aufgebracht und durch den resultierenden Presssitz gehalten.

Die Ausbildung eines drehfesten Presssitzes des rohrförmigen Verbindungsteils 12 auf dem Anbindungsabschnitt 13 des Verzahnungsteils 11 kann besonders bevorzugt dadurch erreicht werden, dass auf dem entsprechenden Verbindungsabschnitt 25 des Verzahnungsteils 11 Materialerhebungen vorgesehen sind, welche für einen zusätzlichen Kraft- und bevorzugt auch Formschluss zwischen dem Verbindungsteil 12 und dem Verzahnungsteil 11 sorgen. Die Materialerhebungen sind beispielsweise in Form von Noppen, bevorzugt aber in Form einer Rändelung 22, so wie sie in Figur 10 veranschaulicht ist, oder in Form einer Rollierung 23, so wie sie in Figur 11 veranschaulicht ist, ausgebildet.

Das in den Figuren 5 und 6 gezeigte Ausführungsbeispiel zeigt eine weitere Ausführungsform eines Lenkritzels 1. Dabei ist eine umlaufende Sicke im Verbindungsteil 12 vorgesehen, welche die Auszugssicherung 14 ausbildet. Die Auszugssicherung 14 in Form der Sicke ist im Verbindungsteil 12 in einer Position angebracht, die einer darunter liegenden Vertiefung bzw. Nut 17 in dem Verzahnungsteil 11 entspricht. Entsprechend ist die Sicke, die als Auszugssicherung 14 dient, umlaufend um den gesamten Umfang des Verbindungsteils 12 herum ausgebildet und stellt in dieser Weise eine zuverlässige Auszugssicherung bereit. In die als umlaufende Nut ausgebildete Vertiefung 17 wird mittels einer Sickenoperation Material des als Rohr ausgebildeten Verbindungsteils 12 eingewalzt, so dass Material in die Nut fließt.

Auch durch das Fließen des Materials in die Nut 17 wird entsprechend eine weitere Vorspannung auf das Wälzlager 16 aufgebracht, so dass dieses fest in seiner Position gehalten werden kann.

In einer derartigen Sickenoperation kann in einfacher Weise mit einer schematisch angedeuteten Walze 24, die in Drehung versetzt wird, die umlaufende Sicke in die Vertiefung 17 umlaufend eingeformt werden. Das Material des Verbindungsteils 12 fließt entsprechend in die Vertiefung 17 des Verzahnungsteils 11. Durch ein solches Walzen kann die Festigkeit der Verbindung zwischen dem Verbindungsteil 12 und dem Verzahnungsteil 11 auch im gesamten Bereich des Verbindungsabschnitts 25 und des Verbindungsbereiches 13 erhöht werden. Die in axialer Richtung wirkenden Spannungen sorgen für einen entsprechenden Materialfluss, der Material auch in die zwischen den Materialerhebungen liegenden Vertiefungen drängt. Zudem wird eine Vorspannung zum Fixieren des Wälzlagers 16 zwischen der Schulter 19 des Verzahnungsteils 11 und der Schulter 20 des Verbindungsteils 12 auf das Wälzlager 16 aufgebracht.

Besonders in Figur 6 ist gut zu erkennen, dass das Wälzlager 16 nicht nur durch das Aufschieben oder Aufpassen auf den Lagersitz 15 auf dem Verzahnungsteil 11 gehalten wird, sondern besonders auch durch das aufgepresste Verbindungsteil 12 eine entsprechende Vorspannung ausgebildet wird, welches durch ein direktes Anliegen an dem Wälzlager im Bereich der Lageraufnahme einen Formschluss und eine entsprechende Vorspannung bereitstellt, so dass das Wälzlager durch das Aufpressen des Verbindungsteils 12 auf das Verzahnungsteil 11 ebenfalls fixiert wird.

Die Figuren 7 und 8 zeigen ein weiteres Ausführungsbeispiel, bei dem die Auszugssicherung 14 des Verbindungsteils 12 wiederum durch ein einfaches Einpressen des Materials des Verbindungsteils 12 in eine entsprechende Vertiefung des Verzahnungsteils 11 durchgeführt wurde.

In Figur 8 ist dazu zu erkennen, dass das rohrförmige Verbindungsteil 12 auf den Verbindungsabschnitt 25 des Verzahnungsteils 11 zum einen aufgepresst ist, um eine drehfeste Verbindung zu erreichen. Zum anderen ist aber im Bereich der Auszugssicherung 14 Material des Verbindungsteils 12 in eine Vertiefung 17 in Form einer Ausnehmung eingebracht. Das Material des Verbindungsteils 12 ist einfach in die Vertiefung 17 eingepresst, um auf diese Weise einen Formschluss zur Auszugssicherung herzustellen.

Auch in Figur 8 ist klar zu erkennen, dass das Wälzlager 16 durch das Verbindungsteil 12 formschlüssig in dem Lenkritzel 1 aufgenommen ist. Im Verzahnungsteil 11 ist dazu im dem Verbindungsabschnitt 25 abgewendeten Ende der Lageraufnahme 15 eine Schulter 19 ausgebildet, an der das Wälzlager 16 anliegt. Entsprechend wird das Wälzlager 16 zwischen der Schulter 19 und der Schulter 20, die durch das Ende des Verbindungsteils 12 gebildet ist, verpresst und entsprechend sicher gehalten. Bevorzugt wird eine Vorspannung auf das Wälzlager 16 in axialer Richtung aufgebracht, so dass dieses sicher gehalten wird.

Da das Verzahnungsteil 11 aus dem Vollen gefertigt ist und das Verbindungsteil 12 als handelsübliches Rohr ausgebildet ist, kann das Lenkritzel kostengünstig hergestellt werden und der Einsatz an hochwertigem Ritzelmaterial kann reduziert werden.

Figur 9 zeigt eine zusätzliche Maßnahme, um die Verdrehsicherheit des Verbindungsteils 12 gegenüber dem Verzahnungsteil 11 weiter zu erhöhen. Insbesondere weist die Vertiefung 17 in Form der umlaufenden Nut des Verzahnungsteils 11 eine Verzahnung der Kanten bzw. einer Rändelung der Kanten auf. Wenn entsprechend Material des Verbindungsteils 12 in die Vertiefung 17 eingebracht wird bzw. in diese einfließt, wird gleichzeitig mittels der Verzahnung der Kante die Verdrehsicherheit noch weiter erhöht.

Bevorzugt ist das Verzahnungsteil 11 mittels eines Kaltmassivumformprozesses hergestellt und das Verbindungsteil 12 ist aus einem Rohr geformt. Hierdurch kann eine vorteilhafte Materialwahl dahingehend getroffen werden, dass das Verzahnungsteil 11 entsprechend der an es gestellten Bedingungen an die Festigkeit im Verzahnungsbereich als aus einem vollen Material geschnittenes und eventuell gehärtetem Teil ausgebildet werden kann, das Verbindungsteil 12 aber in einem kostengünstigeren und/oder leichteren Material und als Rohr ausgebildet sein kann, wodurch hier auch Materialersparnisse erreicht werden können.

Zur Herstellung des Lenkritzels 1 werden zunächst ein Verzahnungsteil 11 und ein Verbindungsteil 12 bereitgestellt. Dann wird das Verbindungsteil 12 mit dem Verzahnungsteil 11 drehfest verbunden. Diese drehfeste Verbindung wird durch Aufpressen erreicht.

In bestimmten Ausführungsformen wird zusätzlich die Auszugssicherung 14 dadurch hergestellt, dass das Verbindungsteil 12 an der Position einer jeweiligen Vertiefung 17 des Verzahnungsteils 11 einer Sickenoperation unterzogen wird und entsprechend Material des Verbindungsteils 12 in die Vertiefung 17 hereinfließt.

In einer weiteren vorteilhaften Ausgestaltung wird vor dem Aufpressen des Verbindungsteils 12 auf das Verzahnungsteil 11 zusätzlich das Wälzlager 16 auf die Lageraufnahme 15 des Verzahnungsteils 11 aufgeschoben oder verpresst und dann erst das Verbindungsteil 12 auf den Verbindungsabschnitt 25 des Verzahnungsteils 11 aufgepresst. Auch auf diese Weise wird wieder eine Vorspannung in axialer Richtung auf das Wälzlager 16 ausgeübt, um dieses sicher zu fixieren.

In der Figur 10 ist ein Verzahnungsteil 11 veranschaulicht, bei dem der Verbindungsabschnitt 25 mit einer Rändelung 22 versehen ist. In Figur 11 ist ein Verzahnungsteil 11 veranschaulicht, bei dem der Verbindungsabschnitt 25 mit einer Rollierung 23 versehen ist. Der Außendurchmesser der größten Materialerhebungen der Rollierung 23 bzw. Rändelung 22 ist größer als der Innendurchmesser der Öffnung 26 des Verbindungsteils 12 im Verbindungsbereich 13. Beim Aufschieben des Verbindungsteils 12 auf den Verbindungsabschnitt 25 werden die Spitzen der Materialerhebungen der Rollierung oder Rändelung abgeflacht und graben sich in die Oberfläche der inneren Öffnung des Verbindungsbereiches 13 des Verbindungsteils 12 ein. Dadurch wird eine kraftschlüssige Verbindung erreicht, bzw. eine Presspassung ausgebildet, welche die feste Anbindung ermöglicht. Dabei ist es bevorzugt, wenn die Aufweitung des Verbindungsteils 12 im Verbindungsbereich 13 unter 0,2mm bleibt, um eine dauerhaltbare Verbindung zu erreichen. Die Verbindung kann dabei derart dauerhaltbar ausgebildet sein, dass eine zusätzliche Auszugssicherung 14 mit einer dazu korrespondierende Vertiefung 17 nicht erforderlich ist.

### Bezugszeichenliste

- 1: Lenkritzel
- 2: Lenkrad
- 3: Lenkwelle
- 4: Zahnstange
- 5: Spurstange
- 6: Rad
- 7: Hilfskraftunterstützung
- 8: Hilfskraftunterstützung
- 9: Universalgelenk
- 10: Anbindungsabschnitt
- 11: Verzahnungsteil
- 12: Verbindungsteil
- 13: Verbindungsbereich
- 14: Auszugsicherung
- 15: Lagersitz
- 16: Wälzlager
- 17: Vertiefung / Nut
- 18: Verzahnungsabschnitt
- 19: Schulter
- 20: Schulter
- 21: Lager
- 22: Rändelung
- 23: Rollierung
- 24: Walze
- 25: Verbindungsabschnitt
- 26: Öffnung

## Patentansprüche

1. Lenkritzel (1), insbesondere als Kupplungsverbindung zwischen Lenkwelle (3) und Zahnstange (4) eines Kraftfahrzeugs, wobei das Lenkritzel (1) einen Verzahnungsabschnitt (18) zum Eingriff in eine Zahnstange (4) und einen Anbindungsabschnitt (10) zur Anbindung an eine Lenkwelle (3) aufweist, und wobei ein den Verzahnungsabschnitt (18) aufweisendes Verzahnungsteil (11) und ein den Anbindungsabschnitt (10) aufweisendes Verbindungsteil (12) vorgesehen sind,
wobei das Verzahnungsteil (11) und das Verbindungsteil (12) drehfest miteinander verpresst sind,
**dadurch gekennzeichnet, dass**
der Verbindungsabschnitt (25) und/oder der Verbindungsbereich (13) konisch ausgebildet ist, zur Erhöhung der Drehmomentübertragung.

2. Lenkritzel gemäß Anspruch 1, **dadurch gekennzeichnet, dass** das Verbindungsteil (12) und das Verzahnungsteil (11) überlappen, insbesondere dass ein Verbindungsabschnitt (25) des Verzahnungsteils (11) mit einem Verbindungsbereich (13) des Verbindungsteils (12) überlappt.

3. Lenkritzel gemäß Anspruch 2, **dadurch gekennzeichnet, dass** in dem Verbindungsabschnitt (25) und/oder dem Verbindungsbereich (13) Materialerhebungen und/oder Materialabsenkungen vorgesehen sind, bevorzugt Noppen, Rändel, Rollierungen und/oder Rillen, zur Erhöhung der Drehmomentübertragung.

4. Lenkritzel gemäß einem der vorstehenden Ansprüche, **dadurch gekennzeichnet, dass** die Verbindung zwischen dem Verzahnungsteil (11) und dem Verbindungsteil (12) dauerhaltbar und nicht demontierbar ausgebildet ist.

5. Lenkritzel gemäß einem der vorstehenden Ansprüche, **dadurch gekennzeichnet, dass** das Verzahnungsteil (11) und das Verbindungsteil (12) unterschiedliche Materialien umfassen.

6. Lenkritzel gemäß einem der vorstehenden Ansprüche, **dadurch gekennzeichnet, dass** das Verzahnungsteil (11) eine Vertiefung (17) aufweist, insbesondere eine Nut und/oder eine Ausnehmung, in welcher Material des Verbindungsteils (12) aufgenommen ist.

7. Lenkritzel gemäß einem der vorstehenden Ansprüche, **dadurch gekennzeichnet, dass** das Verzahnungsteil (11) einen Lagersitz (15) zur Aufnahme eines Wälzlagers (16) aufweist, wobei der Lagersitz (15) bevorzugt eine geringere Ausdehnung in axialer Richtung aufweist, als das aufzunehmende Wälzlager (16).

8. Lenkritzel gemäß Anspruch 7, **dadurch gekennzeichnet, dass** ein Wälzlager (16) in der Lageraufnahme (15) aufgenommen ist und zwischen dem Verzahnungsteil (11) und dem Verbindungsteil (12) gehalten ist, bevorzugt zwischen dem Verzahnungsteil (11) und dem Verbindungsteil (12) verpresst ist, wobei besonders bevorzugt das Verzahnungsteil (11) und das Verbindungsteil (12) eine Vorspannung auf das Wälzlager (16) ausüben.

9. Verfahren zur Herstellung eines Lenkritzels (1) mit einem Verzahnungsabschnitt (18) zum Eingriff in eine Zahnstange (4) und einem Anbindungsabschnitt (10) zur Anbindung an eine Lenkwelle (3), insbesondere eines Lenkritzels nach einem der vorstehenden Ansprüche, umfassend die Schritte:
- Bereitstellen eines den Verzahnungsabschnitt (18) aufweisenden Verzahnungsteils (11),
- Bereitstellen eines den Anbindungsabschnitt (10) aufweisenden Verbindungsteils (12), und
- drehfestes Verbinden des Verzahnungsteils (11) mit dem Verbindungsteil (12),
wobei
das Verzahnungsteil (11) und das Verbindungsteil (12) zur Herstellung der drehfesten Verbindung miteinander verpresst werden,
**dadurch gekennzeichnet, dass**
der Verbindungsabschnitt (25) und/oder der Verbindungsbereich (13) konisch ausgebildet bereitgestellt werden, zur Erhöhung der Drehmomentübertragung.

10. Verfahren gemäß Anspruch 9, **dadurch gekennzeichnet, dass** am Verzahnungsteil (11) mindestens eine Vertiefung (17) eingebracht wird, insbesondere eine Nut und/oder eine Ausnehmung, und Material des Verbindungsteils (11) in die Vertiefung (17) hinein gebracht wird, insbesondere durch walzen, Rollieren oder Ausbilden einer Sicke.

11. Verfahren gemäß einem der Ansprüche 9 oder 10, **dadurch gekennzeichnet, dass** vor der Verbindung des Verzahnungsteils (11) mit dem Verbindungsteil (12) ein Wälzlager (16) auf einen Lagersitz (15) des Verzahnungsteils (11) aufgebracht wird.

12. Verfahren gemäß Anspruch 11, **dadurch gekennzeichnet, dass** das Wälzlager (16) zwischen dem Verzahnungsteil (11) und dem Verbindungsteil (12) verpresst wird, bevorzugt unter Aufbringung einer Vorspannung auf das Wälzlager (16).

## Claims

1. Steering pinion (1), in particular as coupling connection between steering shaft (3) and toothed rack (4) of a motor vehicle, wherein the steering pinion (1) has a toothed portion (18) for engaging in a toothed rack (4) and an attachment portion (10) for the attachment to a steering shaft (3), and wherein a toothed part (11) having the toothed portion (18) and an connecting part (12) having the attachment portion (10) are provided,
wherein the toothed part (11) and the connecting part (12) are pressed in a rotationally fixed manner with one another
**characterised in that**
the connecting portion (25) and/or the connecting region (13) is formed conically, for increasing the torque transmission.

2. Steering pinion according to claim 1, **characterised in that** the connecting part (12) and the toothed part (11) overlap, in particular that a connecting portion (25) of the toothed part (11) overlaps with a connecting region (13) of the connecting part (12).

3. Steering pinion according to claim 2, **characterised in that** in the connecting portion (25) and/or the connecting region (13) are provided material elevations and/or material depressions, preferably nubs, knurls, beadings and/or grooves, for increasing the torque transmission.

4. Steering pinion according to any of the preceding claims, **characterised in that** the connection between the toothed part (11) and the connecting part (12) is formed permanent and not dismountable.

5. Steering pinion according to any of the preceding claims, **characterised in that** the toothed part (11) and the connecting part (12) comprise different materials.

6. Steering pinion according to any of the preceding claims, **characterised in that** the toothed part (11) has an indentation (17), in particular a groove and/or a recess in which material of the connecting part (12) is captured.

7. Steering pinion according to any of the preceding claims, **characterised in that** the toothed part (11) has a bearing seat (15) for the reception of a roller bearing (16), wherein the bearing seat (15) has preferably a smaller expansion in axial direction than the roller bearing (16) to be received.

8. Steering pinion according to claim 7, **characterised in that** a roller bearing (16) is incorporated in the bearing reception (15) and is held between the toothed part (11) and the connecting part (12), preferably is pressed between the toothed part (11) and the connecting part (12), wherein especially preferably the toothed part (11) and the connecting part (12) exert a preload on the roller bearing (16).

9. Method for the production of a steering pinion (1) with a toothed portion (18) for the engagement in a toothed rack (4) and an attachment portion (10) for the attachment to a steering shaft (3), in particular of a steering pinion according to any of the preceding claims, comprising the steps:
- provision of a toothed part (11) having the toothed portion (18),
- provision of a connecting part (12) having the attachment portion (10), and
- non-rotational connection of the toothed part (11) with the connecting part (12),
wherein
the toothed part (11) and the connecting part (12) are pressed with one another for the production of the non-rotational connection,
**characterised in that**
the connecting portion (25) and/or the connecting region (13) are provided formed conically, to increase the torque transmission.

10. Method according to claim 9, **characterised in that** on the toothed part (11) is introduced at least one indentation (17), in particular a groove and/or a recess, and material of the connecting part (11) is introduced into the recess (17), in particular by rolling, roller burnishing or forming of a bead.

11. Method according to any of claims 9 or 10, **characterised in that** before the connecting of the toothed part (11) with the connecting part (12), a roller bearing (16) is introduced onto a bearing seat (15) of the toothed part (11).

12. Method according to claim 11, **characterized in that** the roller bearing (16) is pressed between the toothed part (11) and the connecting part (12), preferably by applying a preload to the roller bearing (16).

## Revendications

1. Pignon de direction (1), en particulier en tant que liaison d'accouplement entre un arbre de direction (3) et une crémaillère (4) d'un véhicule automobile, dans lequel le pignon de direction (1) présente un segment denté (18) pour l'engrènement dans une crémaillère (4) et un segment de raccordement (10) pour le raccordement à un arbre de direction (3), et dans lequel une partie dentée (11) présentant le segment denté (18) et une partie de liaison (12) présentant le segment de raccordement (10) sont prévues,
dans lequel la partie dentée (11) et la partie de liaison (12) sont comprimées l'une avec l'autre de manière solidaire en rotation,
**caractérisé en ce que**
le segment de liaison (25) et/ou la zone de liaison (13) sont réalisés de manière conique, pour augmenter la transmission de couple.

2. Pignon de direction selon la revendication 1, **caractérisé en ce que** la partie de liaison (12) et la partie dentée (11) se chevauchent, en particulier qu'un segment de liaison (25) de la partie dentée (11) chevauche une zone de liaison (13) de la partie de liaison (12).

3. Pignon de direction selon la revendication 2, **caractérisé en ce que** des élévations de matière et/ou des abaissements de matière sont prévus dans le segment de liaison (25) et/ou la zone de liaison (13), de préférence des picots, des moletages, des roulages et/ou rainures, pour augmenter la transmission de couple.

4. Pignon de direction selon l'une quelconque des revendications précédentes, **caractérisé en ce que** la liaison entre la partie dentée (11) et la partie de liaison (12) est réalisée de manière durable et non démontable.

5. Pignon de direction selon l'une quelconque des revendications précédentes, **caractérisé en ce que** la partie dentée (11) et la partie de liaison (12) comprennent des matériaux différents.

6. Pignon de direction selon l'une quelconque des revendications précédentes, **caractérisé en ce que** la partie dentée (11) présente un évidement (17), en particulier une rainure et/ou un évidement, dans lequel le matériau de la partie de liaison (12) est logé.

7. Pignon de direction selon l'une quelconque des revendications précédentes, **caractérisé en ce que** la partie dentée (11) présente un siège de palier (15) pour le logement d'un palier à roulement (16), dans lequel le siège de palier (15) présente de préférence une extension plus faible dans la direction axiale que le palier de roulement (16) à loger.

8. Pignon de direction selon la revendication 7, **caractérisé en ce qu'**un palier de roulement (16) est logé dans le logement de palier (15) et est retenu entre la partie dentée (11) et la partie de liaison (12), de préférence entre la partie dentée (11) et la partie de liaison (12), dans lequel de préférence la partie dentée (11) et la partie de liaison (12) exercent une précontrainte sur le palier à roulement (16).

9. Procédé de fabrication d'un pignon de direction (1) avec un segment denté (18) pour l'engrènement dans une crémaillère (4) et un segment de raccordement (10) pour le raccordement à un arbre de direction (3), en particulier d'un pignon selon l'une quelconque des revendications précédentes, comprenant les étapes :
- de fourniture d'une partie dentée (11) présentant le segment denté (18),
- de fourniture d'une partie de liaison (12) présentant le segment de raccordement (10), et
- de liaison solidaire en rotation de la partie dentée (11) à la partie de liaison (12),
dans lequel
la partie dentée (11) et la partie de liaison (12) sont comprimées l'une avec l'autre pour établir la liaison solidaire en rotation,
**caractérisé en ce que**
le segment de liaison (25) et/ou la zone de liaison (13) sont fournies en étant réalisées de manière conique, pour augmenter la transmission de couple.

10. Procédé selon la revendication 9, **caractérisé en ce qu'**au moins un évidement (17), en particulier une rainure et/ou un creux, est ménagé sur la partie dentée (11), et le matériau de la partie de liaison (11) est amené à l'intérieur de l'évidement (17), en particulier par laminage, roulage ou réalisation d'une moulure.

11. Procédé selon l'une quelconque des revendications 9 ou 10, **caractérisé en ce que**, avant la liaison de la partie dentée (11) à la partie de liaison (12), un palier à roulement (16) est appliqué sur un siège de palier (15) de la partie dentée (11).

12. Procédé selon la revendication 11, **caractérisé en ce que** le palier à roulement (16) est comprimé entre la partie dentée (11) et la partie de liaison (12), de préférence avec application d'une précontrainte sur le palier à roulement (16).
